# EUROPÄISCHE PATENTANMELDUNG

(11) **EP 1 066 915 A1**
(43) Veröffentlichungstag der Anmeldung: **10.01.2001**
(21) Anmeldenummer: 00110437.1
(22) Anmeldetag: 16.05.2000
(51) Int. Cl.: B23Q 1/28, B23Q 1/48, B23Q 1/54

(54) **Vorrichtung zum Bearbeiten eines Werkstückes**

(30) Priorität: 07.07.1999 DE 19931291
(71) Anmelder: RAPID MASCHINENBAU GmbH, 72131 Ofterdingen (DE)
(72) Erfinder: Letzgus, Gottfried, 72108 Rottenburg-Dettingen (DE); Sailer, Stefan, 72108 Rottenburg-Oberndorf (DE)
(74) Vertreter: Wunderlich, Rainer, Dipl.-Ing.

(57) **Zusammenfassung**

Die Erfindung betrifft eine Vorrichtung zum Bearbeiten eines Werkstückes, insbesondere eines Profiles in drei Bearbeitungsrichtungen, welche jeweils zueinander in einem rechten Winkel stehen. Die Vorrichtung umfaßt ein Werkzeug (14) mit einer Werkzeuglängsachse (16), einem Schlitten (26), auf welchem das Werkzeug (14) gelagert ist, und eine Verstelleinrichtung zum Verstellen des Schlittens (26). Eine besonders einfache Ausrichtung der Werkzeuglängsachse (16) in alle drei Bearbeitungsrichtungen wird erfindungsgemäß dadurch erreicht, daß der Schlitten um eine Drehachse (20) drehbar gelagert ist, welche koaxial zur Raumdiagonalen (20a) der drei Bearbeitungsrichtungen angeordnet ist. Die Werkzeuglängsachse (16) ist dabei in einem Neigungswinkel zu der Drehachse (20) angeordnet, wobei durch Drehen des Schlittens (26) um die Drehachse (20) das Werkzeug (14) in alle drei Bearbeitungsrichtungen ausrichtbar ist.

## Beschreibung

Die Erfindung betrifft eine Vorrichtung zum Bearbeiten eines Werkstückes, insbesondere eines Profiles, in drei Bearbeitungsrichtungen, welche jeweils zueinander in einem rechten Winkel stehen, mit einem Werkzeug mit einer Werkzeuglängsachse, einem Schlitten, auf welchem das Werkzeug gelagert ist, und einer Verstelleinrichtung zum Verstellen des Schlittens, wobei die Werkzeuglängsachse in die drei Bearbeitungsrichtungen ausrichtbar ist.

Für eine komplexe oder vollständige Bearbeitung von Stangenprofilen ist es erforderlich, die Arbeitsspindel und somit das Werkzeug senkrecht zu den Profilhauptflächen des Profilstabes zu positionieren. Bei Verwendung von einer Arbeitsspindel für drei Arbeitsebenen muß bei bestehenden Maschinen die Arbeitsspindel über mindestens zwei aufwendige Dreh- und Schwenkachsen positioniert werden. Weiterhin muß die Arbeitsspindel vollständig vom Profil frei gefahren werden, um eine andere Arbeitsebene zu erreichen, da das Werkzeug beim Schwenken einen räumlichen Hüllbereich bildet, der mit dem zu bearbeitenden Profil kollidieren würde.

Die oben erwähnten Dreh- und Schwenkachsen sind von ihrem mechanischen Aufbau sehr aufwendig und teuer. Weiterhin summieren sich die Achstoleranzen der einzelnen Dreh- und Schwenkachsen auf. Dies ist für eine besonders hohe Fertigungsgenauigkeit nachteilig. Schließlich ist die Ansteuerung sehr aufwendig, da mehrere Achsen gleichzeitig bewegt werden müssen. Neben diesen Nachteilen beim Herstellen einer derartigen Vorrichtung ergibt sich außerdem während des Betriebes noch das Problem, daß das Freifahren des Werkzeugs vom Profil relativ große Verfahrwege erfordert. Dies führt zu relativ langen Positionier- und Werkstückbearbeitungszeiten. Hierdurch ist der Maschinennutzungsgrad einer herkömmlichen Bearbeitungsvorrichtung begrenzt.

Der Erfindung liegt die **Aufgabe** zugrunde, eine Bearbeitungsvorrichtung zu schaffen, welche eine Bearbeitung von drei Hauptprofilflächen mit einem Werkzeug bei einer hohen Fertigungsgenauigkeit erlaubt und dabei gleichwohl einfach aufgebaut ist.

Diese Aufgabe wird erfindungsgemäß durch eine Vorrichtung mit den Merkmalen des Anspruchs 1 gelöst. Bevorzugte Ausführungsformen der Erfindung sind in den abhängigen Ansprüchen angegeben.

Bei einer Bearbeitungsvorrichtung der genannten Art ist es erfindungsgemäß vorgesehen, daß der Schlitten uni eine Drehachse drehbar gelagert ist, welche entlang der Raumdiagonalen verläuft, die durch die drei Bearbeitungsrichtungen definiert ist und daß die Werkzeuglängsachse in einem Neigungswinkel zu der Drehachse angeordnet ist, wobei durch Drehen des Schlittens um die Drehachse das Werkzeug in alle drei Bearbeitungsrichtungen ausrichtbar ist.

Ein wesentlicher Aspekt der Erfindung liegt darin, die Drehachse koaxial zu der Raumdiagonalen der drei Hauptbearbeitungsrichtungen anzuordnen. Die Raumdiagonale ist dabei die Diagonale eines gleichseitigen Quaders, der durch die drei Hauptbearbeitungsrichtungen aufgespannt ist und durch deren gemeinsamen Schnittpunkt die Diagonale verläuft. Bei einer vertikalen Projektion der Raumdiagonalen auf eine der drei Hauptbearbeitungsebenen, die durch jeweils zwei Hauptbearbeitungsrichtungen aufgespannt sind, ergibt sich ein Winkel von 45° zu diesen Hauptbearbeitungsrichtungen. Ein um eine derartige Drehachse drehbarer Schlitten, an dem das Werkzeug mit seiner Werkzeuglängsachse in einem definierten Neigungswinkel, insbesondere von etwa 35° angeordnet ist, kann so alleine durch eine Schwenkbewegung um die Drehachse auf alle drei Bearbeitungsrichtungen bzw. senkrecht zu den drei Hauptprofilflächen ausgerichtet werden.

Durch diese erfindungsgemäße Anordnung wird eine Vorrichtung geschaffen,welche mit einem Werkzeug und einer Werkzeugspindel und lediglich einer Drehachse in allen drei Hauptbearbeitungsrichtungen arbeiten kann. Der einfache Aufbau ist sowohl hinsichtlich der Herstellungskosten für die Vorrichtung als auch hinsichtlich des Aufwandes für die Steuerung und die Elektrik vorteilhaft. Durch Einsparung mehrerer miteinander kombinierter Achsen ergibt sich bei der erfindungsgemäßen Vorrichtung mit lediglich einer Drehachse eine sehr hohe Steifigkeit bei einer geringen Einstell- oder Achstoleranz. Aufgrund der speziellen Anordnung der Drehachse in einem Neigungswinkel zu allen drei Hauptbearbeitungsrichtungen ergeben die Schnittkräfte bei der Zerspanung kein oder allenfalls nur ein geringes Drehmoment um die Drehachse, da kein oder kaum ein Hebel vorhanden ist. Die hohe Steifigkeit, die geringen Achstoleranzen und die Vermeidung unerwünschter hoher Drehmomente ermöglichen beim Bearbeiten eines Werkstückes eine besonders hohe Fertigungsgenauigkeit bei einer entsprechend hohen Wiederholgenauigkeit.

Des weiteren erlaubt das Verstellen des Werkzeugs mit lediglich einer Schwenkbewegung einen schnellen Wechsel der Arbeitspositionen bei einer hohen Positioniergenauigkeit.

Auf diese Weise lassen sich die Zustellzeiten verringern und somit die Werkstückbearbeitungszeit sowie der Maschinenausnutzungsgrad erheblich verbessern.

Gemäß einer Weiterbildung der Erfindung ist es bevorzugt, daß auf dem Schlitten eine Spindel mit einem Spindelantrieb zum rotierenden Antreiben des Werkzeugs, insbesondere eines Bohrers oder Fräsers, angeordnet ist. Da bei der erfindungsgemäßen Vorrichtung lediglich eine Spindel und ein Spindelantrieb für die drei Hauptbearbeitungsrichtungen notwendig ist, kann vorzugsweise ein Drehantrieb mit einer hohen Drehzahl eingesetzt werden. So ist ein sehr schnelles und effizientes Bearbeiten des Werkstückes möglich. Die Spindelachse fällt dabei vorzugsweise mit der Werkzeuglängsachse zusammen.

Gemäß einer vorteilhaften Ausführungsform der Erfindung ist vorgesehen, daß der Schlitten zumindest um 240° um die Drehachse schwenkbar ist. Noch einer Schwenkbewegung um je 120° ist jeweils eine Verrastung für den Schlitten in einer der Hauptbearbeitungsrichtungen vorgesehen. Zusammen mit den kleinen Verfahrwegen führt dies zu einer sehr schnellen und genauen Positionierbarkeit des Werkzeuges.

Für ein besonders schnelles Verstellen des Werkzeugs ist es erfindungsgemäß vorteilhaft, daß ein Schwenkantrieb zum Schwenken des Schlittens um die Drehachse vorgesehen ist.

Eine besonders bevorzugte Ausführungsform besteht darin, daß die Werkzeuglängsachse relativ zu dem Schlitten fest ist und daß die Spitze des Werkzeuges in dem Schnittpunkt der Werkzeuglängsachse und der Drehachse angeordnet ist. Da die Spitze bei dieser Anordnung beim Verschwenken an einem Punkt verbleibt, wird ein Hüllbereich der Werkzeugspitze vermieden. Auf diese Weise werden keine oder allenfalls nur sehr geringe Ausgleichsbewegungen bzw. Verfahrbewegungen der Linearachsen erforderlich. Bei dieser Anordnung können beim Bearbeiten an der Werkzeugspitze auftretende Schnittkräfte kein Drehmoment erzeugen, da kein Hebel gegenüber der Drehachse besteht. Es ist so ein besonders schwingungsarmes und damit exaktes Bearbeiten möglich.

Für eine hohe Funktionalität ist es erfindungsgemäß, daß der Schlitten schwenkbar um die Drehachse des Schlittens an einem Lagerbock gelagert ist und daß der Lagerbock entlang mindestens einer Linearachse mittels eines Verfahrantriebes verstellbar ist. Vorzugsweise ist der Lagerbock an einem sogenannten Kreuzschlitten angeordnet, der über zwei Linearachsen geführt und in einer Ebene verfahrbar ist. Für eine besonders flexible Bearbeitung ist der Kreuzschlitten noch senkrecht zu seiner Verfahrebene höhenverstellbar.

Zum Einbringen von Bohrungen und Nuten in entsprechender Tiefe ist es auch erfindungsgemäß, daß an dem Schlitten ein Verfahrantrieb zum Verfahren des Werkzeuges in Richtung der Werkzeuglängsachse angeordnet ist. Der Verfahrantrieb ist insbesondere ein Linearantrieb, welcher durch eine Stellspindel, etwa eine Kugelumlaufspindel, einen Stellzylinder oder einen Rotationsantrieb mit einem Getriebe zur Linearübersetzung verfahrbar ist. Alternativ hierzu kann eine Relativbewegung zwischen dem Profil und dem Werkzeug durch eine entsprechende Zustellung an der Spanneinrichtung des Werkstückes erfolgen.

Für eine effiziente und auch automatisierte Fertigung ist es bevorzugt, daß eine Steuerung vorgesehen ist, durch welche der Schwenkantrieb und/oder der Verfahrantrieb steuerbar sind.

Eine vorteilhafte Ausführungsform der Erfindung liegt weiter darin, daß der Schlitten an einer Hohlwelle angebracht ist, die koaxial zur Drehachse angeordnet und drehbar gelagert ist. Durch diese Hohlwelle kann beispielsweise die Energieversorgung zu dem Spindelantrieb oder eine Kühl- und Schmiermittelzuführung zu dem Werkzeug erfolgen.

Diese Ausführungsform ist in vorteilhafter Weise dadurch weitergebildet, daß eine Späneabsaugeinrichtung vorgesehen ist, mit welcher durch die Hohlwelle Späne absaugbar sind. Auf diese Weise kann der Arbeitsraum am Werkzeug effizient freigehalten werden, so daß eine Behinderung durch eine etwaige größere Späneansammlung zuverlässig verhindert wird.

Die Erfindung wird weiter anhand eines bevorzugten Ausführungsbeispiels erläutert, welches schematisch in den Zeichnungen dargestellt ist. In den Zeichnungen zeigen:
- Fig. 1 und 2: eine Veranschulichung der Anordnung einer Drehachse der erfindungsgemäßen Vorrichtung zu den drei Bearbeitungsrichtungen;
- Fig. 3: eine schematische Draufsicht auf eine erfindungsgemäße Vorrichtung;
- Fig. 4: eine Seitenansicht einer erfindungsgemäßen Vorrichtung;
- Fig. 5 und 6: Detaildarstellung eines Lagerbocks der Vorrichtung von Fig. 4 und
- Fig. 7 bis 10: Detaildarstellungen eines Schlittens mit Werkzeug der Vorrichtung von Fig. 4

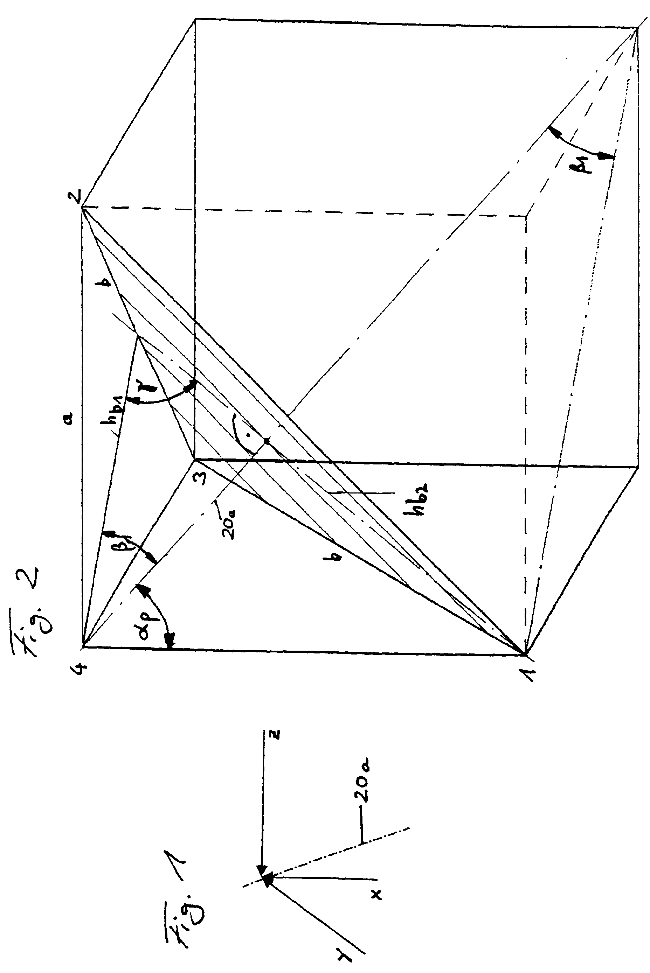

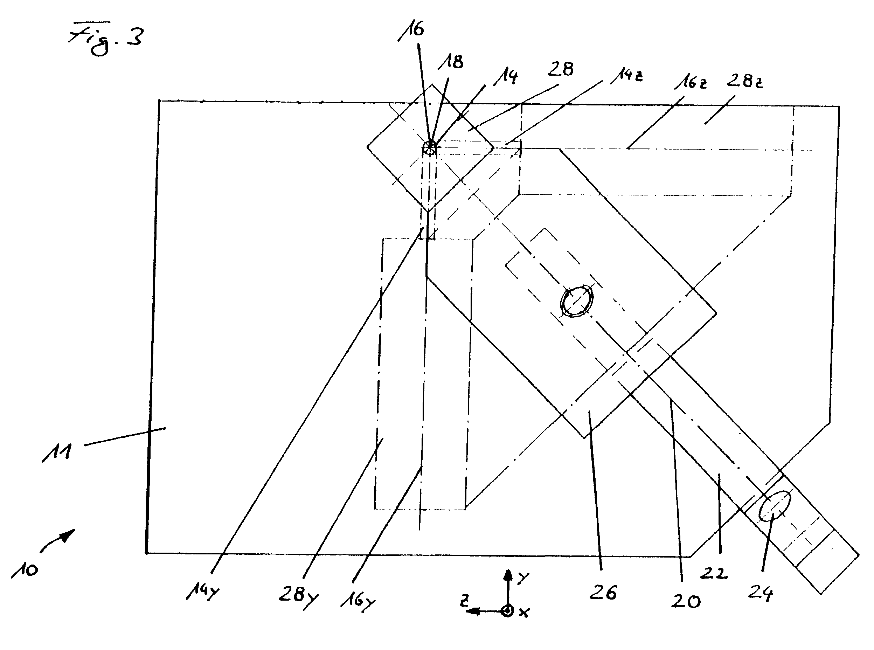

Die drei Richtungen, in welchen die erfindungsgemäße Vorrichtung eine Bearbeitung mit einem Werkzeug ermöglicht, sind in Figur 1 durch Pfeile dargestellt. Die drei Bearbeitungsrichtungen X, Y und Z bilden ein rechtwinkliges, dreidimensionales Koordinatensystem oder ein sogenanntes Dreibein. Nach der erfindungsgemäßen Anordnung ist eine Drehachse so angeordnet, daß die Drehachse koaxial zu einer Raumdiagonalen 20a der drei Bearbeitungsrichtungen X, Y und Z verläuft.

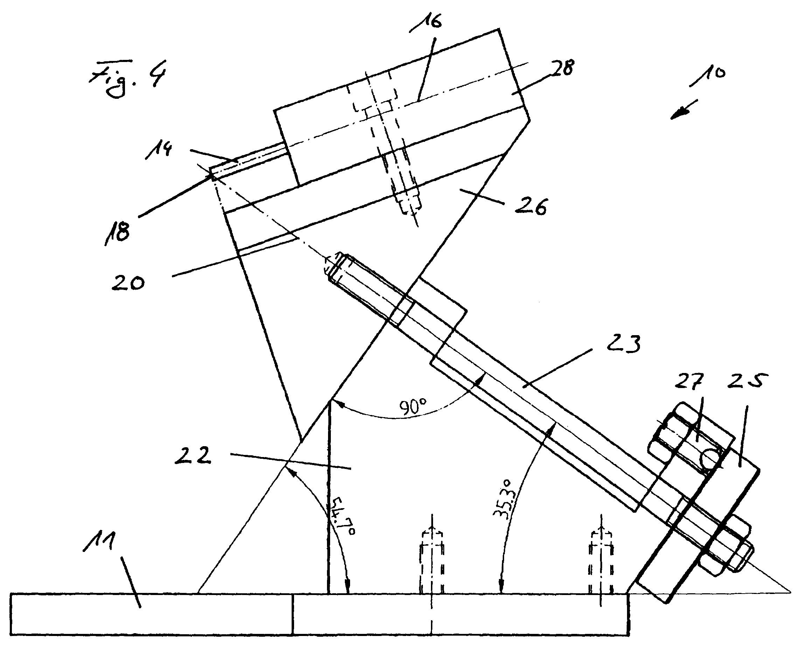

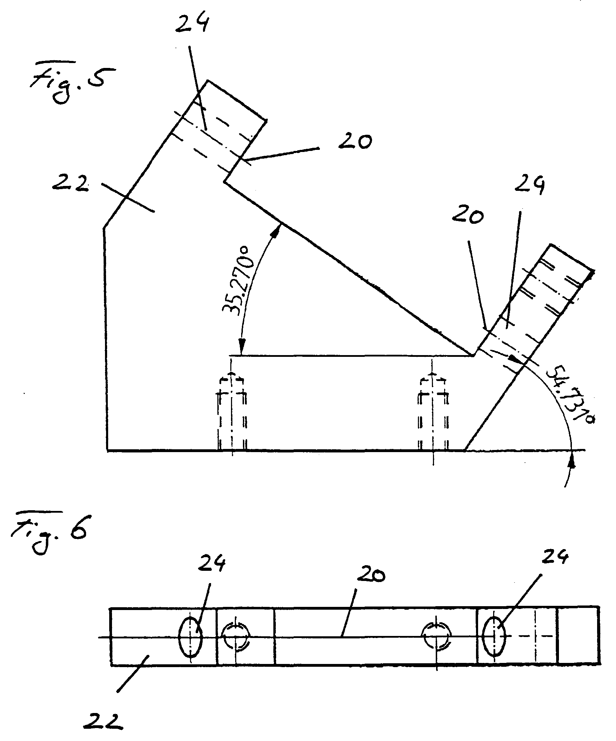

Die Lage der Raumdiagonalen 20a ist noch deutlicher der Fig. 2 zu entnehmen. Die Raumdiagonale 20a verläuft durch den Schnittpunkt 4 der drei Hauptbearbeitungsrichtungen. Diese spannen entsprechen der Fig. 2 einen gleichseitigen Quader auf, dessen Eckbereiche in der Zeichnung mit den Nummern 1 bis 3 versehen sind. Die Raumdiagonale 20a steht in einem rechten Winkel zu der Mittenebene, welche durch die drei Eckpunkte 1, 2 und 3 des Quaders aufgespannt ist. Aufgrund dieser geometrischen Gegebenheiten weist die Raumdiagonale 20a einen Winkel β₁ zu der winkelhalbierenden h_{B1} eines Quadranten jeder Hauptbearbeitungsebene auf. Dieser Winkel β₁ beträgt 35,26439° und ist maßgeblich für einen Neigungswinkel der Werkzeuglängsachse gegenüber der Drehachse. Der Winkel αp, welcher zwischen der Raumdiagonalen 20a und den einzelnen Hauptbearbeitungsrichtungen aufgespannt ist, entspricht dem Winkel γ, welcher sich auf 54,7356° errechnet.

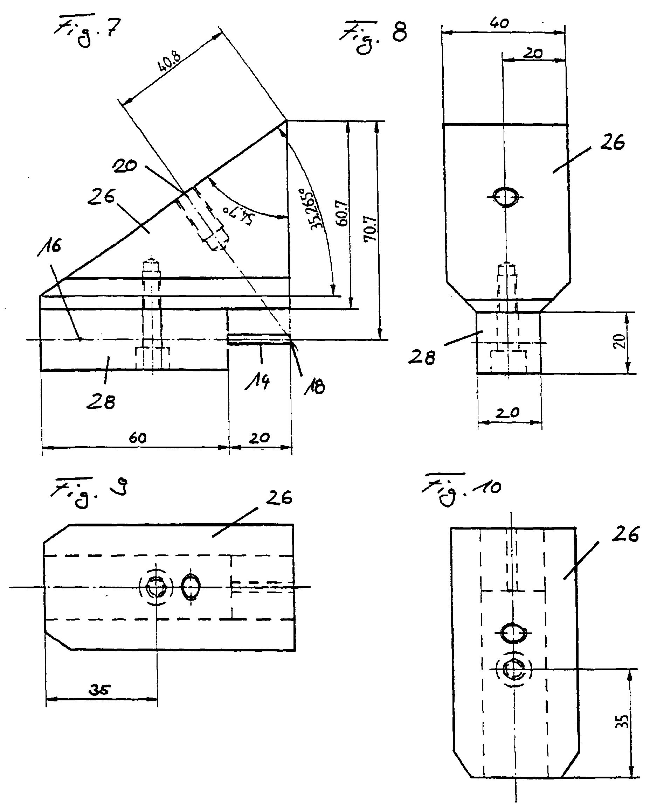

Ausführungsbeispiele einer erfindungsgemäßen Vorrichtung 10 sind in den Figuren 3 und 4 zu entnehmen. Auf einer parallel zur Y-Z Ebene verlaufenden Grundplatte 11 ist ein etwa dreieck-förmiger Lagerbock 22 befestigt, welcher eine Lagerbohrung 24 aufweist. Die Lagerbohrung 24 verläuft in einem Neigungswinkel von 35,3° zu der Grundplatte 11 und ist koaxial zu der Drehachse 20 und der Raumdiagonalen 20a ausgebildet. Die Lagerbohrung 24 dient zur Aufnahme einer Welle 23, an dessen zur Grundplatte 11 gerichtetem Ende ein Schwenkantrieb 25 angeordnet ist, während an dem anderen Ende ein Schlitten 26 drehfest angebracht ist. Der Schlitten 26 ist im Querschnitt als ein etwa rechtwinkliges Dreieck ausgebildet. An einem dieser Schenkel ist eine Spindel 28 mit dem Werkzeug 14 gelagert.

In Fig. 3 ist mit durchgehender Linie das Werkzeug 14 in einer Stellung gezeigt, bei der seine Werkzeuglängsachse 16 senkrecht zur Zeichnungsebene oder der Y-Z Ebene ausgerichtet ist. Das Werkzeug 14, welches bei dem gezeigten Beispiel ein Bohrer ist, ist derart ausgebildet, daß das freie Ende oder die Spitze 18 des Werkzeuges 14 im Schnittpunkt der Drehachse 20 mit der Werkzeuglängsachse 16 liegt.

Durch ein Schwenken des Schlittens 26 um die Drehachse 20 um einen Betrag von 120° wird die Werkzeuglängsachse 16 aus der X-Richtung in die Y-Richtung geschwenkt. Diese Lage ist mit einer Strichpunktlinie dargestellt, wobei die Werkzeuglängsachse mit 16y, das Werkzeug mit 14y und die Spindel mit 28y bezeichnet sind.

Durch ein weiteres Verschwenken um 120° im Uhrzeigersinn um die Drehachse 20 wird die Werkzeuglängsachse 16y aus der Y-Richtung in die Z-Richtung verschwenkt, wie es durch die strichpunktiert gezeichnete Werkstücklängsachse 16z dargestellt ist. Zur besseren Übersicht sind auch das Werkzeug 14z und die Spindel 28z in dieser Lage mit einer Strickpunktlinie umrissen.

Aus der Zusammenschau dieser drei Grundpositionen des Werkzeuges 14 geht anschaulich hervor, daß mit der erfindungsgemäßen Vorrichtung 10 ein schneller und einfacher zu steuernder Positionswechsel zwischen den drei Hauptbearbeitungsrichtungen X, Y und Z möglich ist. Durch die Anordnung der Spitze 18 des Werkzeuges 14 im Schnittpunkt der Werkzeuglängsachse 14 mit der Drehachse 20 werden Schwenkbewegungen der Spitze 18 vermieden, wodurch die Gefahr von Kollisionen mit dem Werkstück beim Verschwenken vermieden werden. Das Werkstück kann entsprechend der gewünschten Bearbeitung über die Spanneinrichtung 12 zugestellt werden, so daß das Werkstück mit seinem freitragenden Eckbereich in den Bearbeitungsbereich an der Spitze 18 des Werkzeuges 14 gelangt.

Bei der erfindungsgemäßen Vorrichtung 10 von Fig. 4 ist als Teil des Schwenkantriebes 25 ein Antriebsrad dargestellt, welches für eine exakte Positionierung mit einer Verrastungseinrichtung 27 zusammenwirkt. Diese umfaßt eine Spannschraube und einen Kugelkopf, welcher in entsprechenden Ausnehmungen in dem Antriebsrad des Schwenkantriebes 25 einrasten kann. Die Fig. 4 zeigt die Vorrichtung 10 in einer Zwischenstellung während eines Verstellvorganges. Dabei befindet sich die Spindel 28 in ihrem höchsten Punkt beim Verstellen aus der Bearbeitungslage in Z-Richtung zu der Bearbeitungslage in Y-Richtung.

Die Ausbildung des Lagerbocks 22 ist im Detail in den Fig. 5 und 6 gezeigt. Der plattenförmige Lagerbock 22 umfaßt zwei Vorsprünge, in welchen die Lagerbohrungen 24 koaxial zur Drehachse 20 eingebracht sind. Die Lagerbohrungen 24 dienen zur Aufnahme der Welle 23, an welchem der Schlitten 26 befestigt wird. Die Drehachse 20 und somit die Lagerbohrungen 24 werden in einem Winkel von 35,270° gegenüber der zur Grundplatte 11 hin gerichteten Seite des Lagerbocks 22 angeordnet.

Die Ausbildung des Schlittens 26 der erfindungsgemäßen Vorrichtung 10 gemäß Fig. 4 einschließlich der wesentlichen Außenmaße sind den Fig. 7 bis 10 in vier Klapprichtungen entnehmbar. Entsprechend der Seitenansicht von Fig. 7 weist der Schlitten 26 die Form eines rechtwinkeligen Dreiecks auf, wobei an der Seite des längeren Schenkels, welcher den rechten Winkel einschließt, die Spindel 28 mit dem Werkzeug 14 fest angebracht ist. Die Länge des Werkzeuges 14 ist so ausgestaltet, daß diese bündig mit der angrenzenden Seite des dreieckförmigen Schlittens 26 abschließt, wobei die Spitze 18 des Werkzeuges 14 im Schnittpunkt der Werkzeuglängsachse 16 mit der Drehachse 20 zu liegen kommt. Der Schlitten 26 wird an der Seite seiner Basis mittels einer Schraubbefestigung mit der Welle 23 drehfest verbunden, so daß der Schlitten gemeinsam mit der Welle 23 um die erfindungsgemäß angeordnete Drehachse 20 schwenkbar ist.

## Patentansprüche

1. Vorrichtung zum Bearbeiten eines Werkstückes, insbesondere eines Profiles, in drei Bearbeitungsrichtungen, welche jeweils zueinander in einem rechten Winkel stehen, mit
- einem Werkzeug (14) mit einer Werkzeuglängsachse (16),
- einem Schlitten (26), auf welchem das Werkzeug (14) gelagert ist, und
- einer Verstelleinrichtung zum Verstellen des Schlittens (26), wobei die Werkzeuglängsachse (16) in die drei Bearbeitungsrichtungen ausrichtbar ist,
dadurch **gekennzeichnet,**
- daß der Schlitten (26) um eine Drehachse (20) drehbar gelagert ist, welche entlang der Raumdiagonalen (20a) verläuft, die durch die drei Bearbeitungsrichtungen definiert ist, und
- daß die Werkzeuglängsachse (16) in einem Neigungswinkel zu der Drehachse (20) angeordnet ist, wobei durch Drehen des Schlittens (26) um die Drehachse (20) das Werkzeug (14) in alle drei Bearbeitungsrichtungen ausrichtbar ist.

2. Vorrichtung nach Anspruch 1,
dadurch **gekennzeichnet,**
daß auf dem Schlitten (26) eine Spindel (28) mit Spindelantrieb zum rotierenden Antreiben des Werkzeuges (14) angeordnet ist.

3. Vorrichtung nach Anspruch 1 oder 2,
dadurch **gekennzeichnet,**
daß der Schlitten zumindest um 240° um die Drehachse (20) schwenkbar ist.

4. Vorrichtung nach einem der Ansprüche 1 bis 3,
dadurch **gekennzeichnet,**
daß ein Schwenkantrieb zum Schwenken des Schlittens (26) um die Drehachse (20) vorgesehen ist.

5. Vorrichtung nach einem der Ansprüche 1 bis 4,
dadurch **gekennzeichnet,**
daß der Schlitten (26) an einem Lagerbock (22) schwenkbar um die Drehachse (20) gelagert ist und
daß der Lagerblock entlang mindestens einer Linearachse mittels eines Verfahrantriebes verstellbar ist.

6. Vorrichtung nach einem der Ansprüche 1 bis 5,
dadurch **gekennzeichnet,**
daß zumindest ein Verfahrantrieb zum Verfahren des Werkzeuges (14) in Richtung der Werkzeuglängsachse (16) angeordnet ist.

7. Vorrichtung nach einem der Ansprüche 1 bis 6,
dadurch **gekennzeichnet,**
daß die Werkzeuglängsachse (16) relativ zu dem Schlitten (26) fest ist und
daß eine Spitze (18) des Werkzeuges (14) in dem Schnittpunkt der Werkzeuglängsachse (14) und der Drehachse (20) angeordnet ist.

8. Vorrichtung nach einem der Ansprüch 4 bis 7,
dadurch **gekennzeichnet,**
daß eine Steuerung vorgesehen ist, durch welche der Schwenkantrieb und/oder der Verfahrantrieb steuerbar sind.

9. Vorrichtung nach einem der Ansprüche 1 bis 8,
dadurch **gekennzeichnet,**
daß der Schlitten (26) an einer Hohlwelle angebracht ist, die koaxial zur Drehachse (20) angeordnet und drehbar gelagert ist.

10. Vorrichtung nach Anspruch 9,
dadurch **gekennzeichnet,**
daß eine Späneabsaugeinrichtung vorgesehen ist, mit welcher durch die Hohlwelle Späne absaugbar sind.

11. Vorrichtung nach einem der Ansprüche 1 bis 10,
dadurch **gekennzeichnet,**
daß der Neigungswinkel β₁ der Werkzeuglängsachse (16) gegenüber der Drehachse (20) etwa 35°, insbesondere 35,26439°, beträgt.
